# EUROPÄISCHE PATENTSCHRIFT

(11) **EP 3 512 685 B1**
(45) Veröffentlichungstag und Bekanntmachung des Hinweises auf die Patenterteilung: **10.11.2021**
(21) Anmeldenummer: 17732412.6
(22) Anmeldetag: 22.06.2017
(51) Int. Cl.: B29C 48/49, B29C 48/07, B29C 48/21, B29C 48/25, B29D 30/06

(54) **EXTRUDER-VORRICHTUNG**
EXTRUDER DEVICE
DISPOSITIF D'EXTRUSION

(30) Priorität: 15.09.2016 DE 102016217596
(43) Veröffentlichungstag der Anmeldung: 24.07.2019
(73) Patentinhaber: Continental Reifen Deutschland GmbH, 30165 Hannover (DE)
(72) Erfinder: SHARIFI, Monir, 30952 Ronnenberg (DE); STEINER, Frank Stefan, 30451 Hannover (DE)
(74) Vertreter: Continental Corporation
(86) Internationale Anmeldenummer: PCT/EP2017/065329
(87) Internationale Veröffentlichungsnummer: WO 2018/050305

(56) Entgegenhaltungen:
- JP-A- H06 210 702
- JP-A- 2004 230 593
- JP-A- 2009 202 569
- JP-A- 2014 133 392
- US-A- 4 556 382
- US-A- 4 653 994

## Beschreibung

Die vorliegende Erfindung bezieht sich auf eine Extruder-Vorrichtung zur Extrusion von Kautschuk.

Die Erfindung geht aus von einer Extruder-Vorrichtung zur Extrusion von Kautschuk. Die Extruder-Vorrichtung weist mindestens eine erste Wing-Extruderkomponente und mindestens eine zweite Wing-Extruderkomponente auf und mindestens einen ersten Cap-Extruder und mindestens einen zweiten Cap-Extruder und mindestens einen Base-Extruder und mindestens eine Vorform-Vorrichtung auf. Dabei sind die mindestens eine erste Wing-Extruderkomponente und die mindestens eine zweite Wing-Extruderkomponente zur Extrusion mindestens einer Wing-Kautschukmischung vorgesehen. Der mindestens eine erste Cap-Extruder ist zur Extrusion mindestens einer ersten Cap-Kautschukmischung und der mindestens eine zweite Cap-Extruder ist zur Extrusion mindestens einer zweiten Cap-Kautschukmischung vorgesehen. Der mindestens eine Base-Extruder ist zur Extrusion einer Base-Kautschukmischung vorgesehen. Die erste Wing-Extruderkomponente liegt in einer ersten Wing-Ebene und die zweite Wing-Extruderkomponente liegt in einer zweiten Wing-Ebene. Der mindestens eine erste Cap-Extruder liegt in einer ersten Cap-Ebene und der mindestens eine zweite Cap-Extruder liegt in einer zweiten Cap-Ebene. Der mindestens eine Base-Extruder liegt in einer Base-Ebene. Dabei liegen die erste Wing-Ebene, die zweite Wing-Ebene, die erste Cap-Ebene, die zweite Cap-Ebene und die Base-Ebene zueinander parallel.

Die mindestens eine erste Wing-Extruderkomponente und die mindestens eine zweite Wing-Extruderkomponente sind Bestandteil eines Wing-Extruders. Insbesondere bilden die mindestens eine erste Wing-Extruderkomponente und die mindestens eine zweite Wing-Extruderkomponente den Wing-Extruder. Der Wing-Extruder kann weitere Wing-Extruderkomponenten aufweisen.

Die Kautschukmischungen sind insbesondere für eine Verarbeitung zu einem Reifenrohling oder einem Luftreifen vorgesehen. Beispielsweise sind die Kautschukmischungen für eine Verarbeitung zu einem Laufstreifen des Reifenrohlings oder des Luftreifens vorgesehen.

Bei einer Wing-Ebene, einer Cap-Ebene oder einer Base-Ebene handelt es sich jeweils um ein unbegrenzt ausgedehntes, zweidimensionales mathematisches Objekt.

Aus dem Stand der Technik sind Extruder-Vorrichtungen bekannt.

So wird beispielsweise in der EP 2 308655 A1 oder in der JP 2014 133392 A eine Extruder-Vorrichtung offenbart, wobei die Extruder-Vorrichtung einen Wing-Extruder, einen Cap-Extruder und eine Vorform-Vorrichtung aufweist.

Die aus dem Stand der Technik bekannten Extruder-Vorrichtungen können aufwändig zu warten sein. Dabei kann es beispielsweise der Fall sein, dass ein Wing-Extruder seltener gewartet werden muss als ein Cap-Extruder.

Beispielhaft für eine Wartungsmaßnahme an einem Wing-Extruder oder an einem Cap-Extruder ist eine Reinigung des Wing-Extruders beziehungsweise des Cap-Extruders. Insbesondere handelt es sich dabei um eine Reinigung des jeweiligen Extruders von Rückständen einer extrudierten Kautschukmischung.

Schließlich kann bei Cap-Extrudern häufiger ein Wechsel der Kautschukmischungen erforderlich sein, als es bei Wing-Extrudern der Fall ist.

Bei den aus dem Stand der Technik bekannten Extruder-Vorrichtungen kann es erforderlich sein, zunächst einen Wing-Extruder aus der Extruder-Vorrichtung herauszunehmen, um dadurch Zugang zu einem Cap-Extruder zu erhalten. Ursächlich für den Umstand, wonach zunächst der Wing-Extruder aus der Extruder-Vorrichtung herausgenommen werden muss, um dadurch Zugang zu dem Cap-Extruder zu erhalten, kann die technische Konstruktion und/oder der Aufbau der Extruder-Vorrichtung sein. Der Vorgang des Herausnehmens des Wing-Extruders aus der Extruder-Vorrichtung kann somit notwendig sein, um eine Reinigung des Cap-Extruders vorzunehmen. Die Reinigung des Cap-Extruders kann dadurch langwierig und umständlich sein. Die Extruder-Vorrichtung kann dadurch gegebenenfalls insgesamt nicht optimal betrieben und eingesetzt werden.

Der Erfindung liegt daher die Aufgabe zugrunde, eine verbesserte Extruder-Vorrichtung bereitzustellen.

Gelöst wird die gestellte Aufgabe erfindungsgemäß durch die Merkmale der Extruder-Vorrichtung gemäß dem Anspruch 1.

Bei der Extrusionsbewegung handelt es sich um die Bewegung der extrudierten Kautschukmischung in der Extruder-Vorrichtung. Die Richtung der Extrusionsbewegung weist zu der Vorform-Vorrichtung und zu einer Extruder-Düse, aus der die extrudierten Kautschukmischungen herausgeführt werden.

Durch den erfindungsgemäßen Umstand, wonach in Richtung einer Extrusionsbewegung, räumlich vor der mindestens einen Vorform-Vorrichtung der mindestens eine erste Cap-Extruder und der mindestens eine zweite Cap-Extruder räumlich nebeneinander angeordnet sind und eine Wing-Ebene räumlich unterhalb der zweiten Cap-Ebene liegt, wird der Zugang zu den Cap-Extrudern einfacher gestaltet, als es bei herkömmlichen Extruder-Vorrichtungen der Fall ist.

Hintergrund des einfacher gestalteten Zugangs zu den Cap-Extrudern ist, dass die beiden Cap-Extruder räumlich oberhalb der Wing-Extruderkomponenten angeordnet sind. Die Wing-Extruderkomponenten sind unterhalb der Cap-Extruder angeordnet und nicht, wie es aus dem Stand der Technik bekannt ist, oberhalb der Cap-Extruder.

Um Wartungsmaßnahmen an einem Cap-Extruder vornehmen zu können, ist es somit nicht notwendig, zunächst eine Wing-Extruderkomponente aus der Extruder-Vorrichtung herauszunehmen, um dadurch Zugang zu einem Cap-Extruder zu erhalten. Eine Reinigung oder eine Reparatur der Cap-Extruder oder eine Inspektion an den Cap-Extrudern kann somit schneller vorgenommen werden, als es bei herkömmlichen Extruder-Vorrichtungen der Fall ist. Darüber hinaus werden nicht erforderliche Arbeiten und Montagemaßnahmen an den Wing-Extruderkomponenten vermieden. Da unnötige Arbeiten und Montagemaßnahmen an einer Wing-Extruderkomponente mit einer höheren Verschleißwahrscheinlichkeit und sogar mit der Wahrscheinlichkeit einer unbeabsichtigten Beschädigung der Wing-Extruderkomponente und somit möglicherweise des Wing-Extruders einhergehen können, werden darüber hinaus die Wing-Extruderkomponenten und der Wing-Extruder somit insgesamt technisch geschont. Die Einsatzfähigkeit der Wing-Extruderkomponenten wird dadurch sichergestellt.

Der vereinfachte Zugang auf die Cap-Extruder und die Schonung der Wing-Extruderkomponenten und des Wing-Extruders führen zu einem verbesserten Einsatz der Extruder-Vorrichtung. Die Extruder-Vorrichtung kann effizienter eingesetzt werden, da Wartungsmaßnahmen schneller durchgeführt werden können, als es im Stand der Technik der Fall ist. Hintergrund des effizienteren Einsatzes der Extruder-Vorrichtung ist, dass Wartungsmaßnahmen in kürzeren Zeitdauern an Komponenten der Extruder-Vorrichtung vorgenommen werden können, als es gemäß dem Stand der Technik der Fall sein kann.

Je kürzer die Zeitdauern zur Durchführung von Wartungsmaßnahmen an Komponenten der Extruder-Vorrichtung und somit an der Extruder-Vorrichtung selbst sind, desto länger sind die Einsatzdauern der Extruder-Vorrichtung. Bei der Einsatzdauer handelt es sich um die Dauer, während der mittels der Extruder-Vorrichtung Kautschuk extrudiert wird.

Darüber hinaus wird diese Einsatzdauer dadurch verlängert, dass Komponenten der Extruder-Vorrichtung, wie beispielsweise der Wing-Extruder oder eine Wing-Extruderkomponente, geschont werden. Diese Vorteile sind insbesondere im Fall eines Wechsels der Kautschukmischung in den Cap-Extrudern erheblich. Darüber hinaus wird durch die Konstruktion der erfindungsgemäßen Extruder-Vorrichtung ein Materialfluss der Kautschukmischung, im Vergleich zu den aus dem Stand der Technik bekannten Extruder-Vorrichtungen, optimiert. Darüber hinaus ist mindestens eine weitere Extruder-Komponente, die zur Extrusion einer weiteren Substanz vorgesehen ist, räumlich zwischen dem mindestens einen zweiten Cap-Extruder und dem mindestens einen Base-Extruder angeordnet und/oder räumlich zwischen der mindestens einen ersten Wing- Extruderkomponente und der mindestens einen zweiten Wing-Extruderkomponente angeordnet.

Somit wird eine verbesserte Extruder-Vorrichtung bereitgestellt.

Weitere vorteilhafte Ausgestaltungsformen der Erfindung sind Gegenstand der Unteransprüche.

Gemäß einer Ausgestaltungsform der Erfindung sind die mindestens eine erste Wing-Extruderkomponente und/oder die mindestens eine zweite Wing-Extruderkomponente räumlich zwischen dem mindestens einen zweiten Cap-Extruder und dem mindestens einen Base-Extruder angeordnet.

Durch den erfindungsgemäßen Umstand, wonach die mindestens eine erste Wing-Extruderkomponente und/oder die mindestens eine zweite Wing-Extruderkomponente räumlich zwischen dem mindestens einen zweiten Cap-Extruder und dem mindestens einen Base-Extruder angeordnet sind, wird ein geringerer Druck in der Extruder-Vorrichtung aufgebaut, als es bei aus dem Stand der Technik bekannten Extruder-Vorrichtungen der Fall ist. Darüber hinaus wird der Fließvorgang des zu extrudierenden Materials im Vergleich zum Stand der Technik verbessert. Ferner ist eine mechanische Verbindung der Extruder-Vorrichtung mit einer Vorschablone einfacher ausführbar, als es gemäß dem Stand der Technik der Fall sein kann. Die Vorschablone kann Bestandteil der Extruder-Vorrichtung und zur Beeinflussung des Fließens des zu extrudierenden Materials durch die Extruder-Vorrichtung, sowie zur Kontrolle des Extrudierens selbst vorgesehen sein. Gemäß einer nächsten vorzugsweisen Ausgestaltungsform der Erfindung liegt die Base-Ebene in der der Base-Extruder liegt, zwischen einer Wing-Ebene und einer Cap-Ebene. Durch den erfindungsgemäßen Umstand, wonach die Base-Ebene in der der Base-Extruder liegt, zwischen einer Wing-Ebene und einer Cap-Ebene liegt, können insbesondere der mindestens eine erste Cap-Extruder und/oder der mindestens eine zweite Cap-Extruder auf einfachere Weise gereinigt und gewartet werden, als es gemäß dem Stand der Technik der Fall ist.

Gemäß einer nächsten vorzugsweisen Ausgestaltungsform der Erfindung sind die mindestens eine erste Wing-Extruderkomponente und die mindestens eine zweite Wing-Extruderkomponente über mindestens eine Verbindungs-Vorrichtung derart mit der Vorform-Vorrichtung verbunden, dass die mindestens eine Verbindungs-Vorrichtung die mindestens eine Wing-Kautschukmischung derart mit der mindestens einen ersten Cap-Kautschukmischung und der mindestens einen zweiten Cap-Kautschukmischung und der mindestens einen Base-Kautschukmischung zusammenführt, dass die mindestens eine erste Cap-Kautschukmischung und die mindestens eine zweite Cap-Kautschukmischung räumlich zwischen der mindestens einen Wing-Kautschukmischung und der mindestens einen Base-Kautschukmischung angeordnet sind.

Insbesondere sind dadurch die mindestens eine erste Cap-Kautschukmischung und die mindestens eine zweite Cap-Kautschukmischung räumlich oberhalb der mindestens einen Base-Kautschukmischung angeordnet sind.

Durch den erfindungsgemäßen Umstand, wonach die mindestens eine erste Wing-Extruderkomponente und die mindestens eine zweite Wing-Extruderkomponente über mindestens eine Verbindungsvorrichtung derart mit der Vorform-Vorrichtung verbunden sind, dass die mindestens eine Verbindungsvorrichtung die mindestens eine Wing-Kautschukmischung derart mit der mindestens einen ersten Cap-Kautschukmischung und der mindestens einen zweiten Cap-Kautschukmischung und der mindestens einen Base-Kautschukmischung zusammenführt, dass die mindestens eine erste Cap-Kautschukmischung und die mindestens eine zweite Cap-Kautschukmischung räumlich zwischen der mindestens einen Wing-Kautschukmischung und der mindestens einen Base-Kautschukmischung angeordnet sind, wird ein Gesamtkautschukelement ermöglicht, bei dem die einzeln extrudierten Kautschukmischungen derart räumlich zueinander angeordnet sind, wie es insbesondere für einen Reifenrohling vorgesehen und sinnvoll ist.

Die Verbindungs-Vorrichtung kann beispielsweise als Verbindungskanal ausgeführt sein.

Weitere Merkmale, Vorteile und Einzelheiten, auf die die Erfindung in ihrem Umfang aber nicht beschränkt ist, werden nun anhand der Zeichnungen näher beschrieben.

Es zeigt:
- Fig. 1: eine schematische Darstellung einer erfindungsgemäßen Extruder-Vorrichtung gemäß einer ersten Ausführungsform;
- Fig. 2: eine schematische Darstellung einer erfindungsgemäßen Extruder-Vorrichtung gemäß einer zweiten Ausführungsform;
- Fig. 3: eine schematische Darstellung einer erfindungsgemäßen Extruder-Vorrichtung gemäß einer dritten Ausführungsform;
- Fig. 4: eine schematische Darstellung einer erfindungsgemäßen Extruder-Vorrichtung gemäß einer vierten Ausführungsform;
- Fig. 5: eine schematische Darstellung einer erfindungsgemäßen Extruder-Vorrichtung gemäß einer fünften Ausführungsform in Schnittansicht;
- Fig. 6: eine schematische Darstellung einer extrudierten Kautschukmischung eines Laufstreifens eines Luftreifens im Querschnitt.

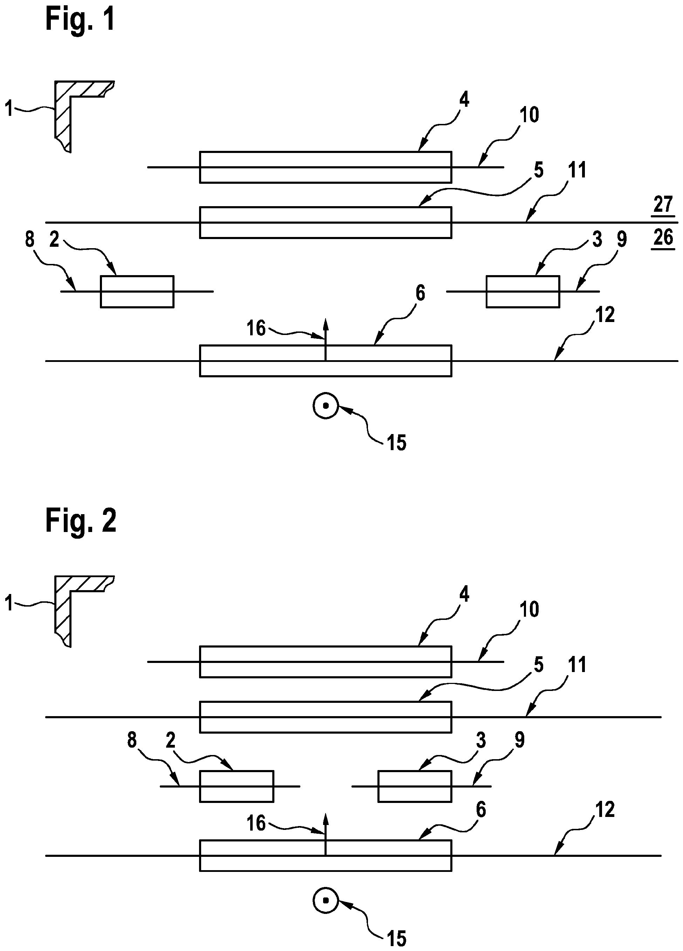

In der Figur 1 ist eine erfindungsgemäße Extruder-Vorrichtung 1 gemäß einer ersten Ausführungsform schematisch dargestellt. Die erste Wing-Extruderkomponente 2 und die zweite Wing-Extruderkomponente 3 liegen in der ersten Wing-Ebene 8 beziehungsweise in der zweiten Wing-Ebene 9. Die Darstellung in der Figur 1 zeigt insbesondere einen Auslass oder einen Fließkanal der mindestens einen ersten Wing-Extruderkomponente 2 beziehungsweise der mindestens einen zweiten Wing-Extruderkomponente 3.

Gemäß der in der Figur 1 schematisch dargestellten Ausführungsform liegen die erste Wing-Ebene 8 und die zweite Wing-Ebene 9 auf gleicher Höhe im Raum. Der erste Cap-Extruder 4 liegt in der ersten Cap-Ebene 10, der zweite Cap-Extruder 5 liegt in der zweiten Cap-Ebene 11. Der Base-Extruder 6 liegt in der Base-Ebene 12. Die erste Wing-Ebene 8, die zweite Wing-Ebene 9, die erste Cap-Ebene 10, die zweite Cap-Ebene 11 und die Base-Ebene 12 liegen zueinander parallel. Der mindestens eine erste Cap-Extruder 4 und der mindestens eine zweite Cap-Extruder 5 sind räumlich nebeneinander beziehungsweise untereinander angeordnet. Sowohl die erste Wing-Ebene 8 als auch die zweite Wing-Ebene 9 liegen, auch bezogen auf eine Richtung eines Normalenvektors 16 der Base-Ebene 12, räumlich unterhalb der zweiten Cap-Ebene 11. Die zweite Cap-Ebene 11 unterteilt den gesamten Raum in zwei Raumhälften 26 und 27. Die Base-Ebene 12 liegt in der ersten Raumhälfte 26. Als unterhalb der zweiten Cap-Ebene 11 gilt im Sinne der Erfindung der Erfindung jeder Punkt im Raum der in der Hälfte des Raumes liegt, in der auch die Base-Ebene 12 liegt, also der ersten Raumhälfte 26.

Als oberhalb der zweiten Cap-Ebene 11 gilt im Sinne der Erfindung jeder Punkt der in der zweiten Raumhälfte 27 liegt.

Diese Anordnung der Komponenten der Extruder-Vorrichtung 1 ist innerhalb der Extruder-Vorrichtung 1 in Richtung einer Extrusionsbewegung 15 räumlich vor mindestens einer Vorform-Vorrichtung angeordnet.

In der Figur 2 ist eine erfindungsgemäße Extruder-Vorrichtung 1 gemäß einer zweiten Ausführungsform schematisch dargestellt. Im Unterschied zu der in der Figur 1 dargestellten Ausführungsform sind die Wing-Extruderkomponenten 2 und 3 räumlich zwischen dem mindestens einen zweiten Cap-Extruder 5 und dem mindestens einen Base-Extruder 6 angeordnet.

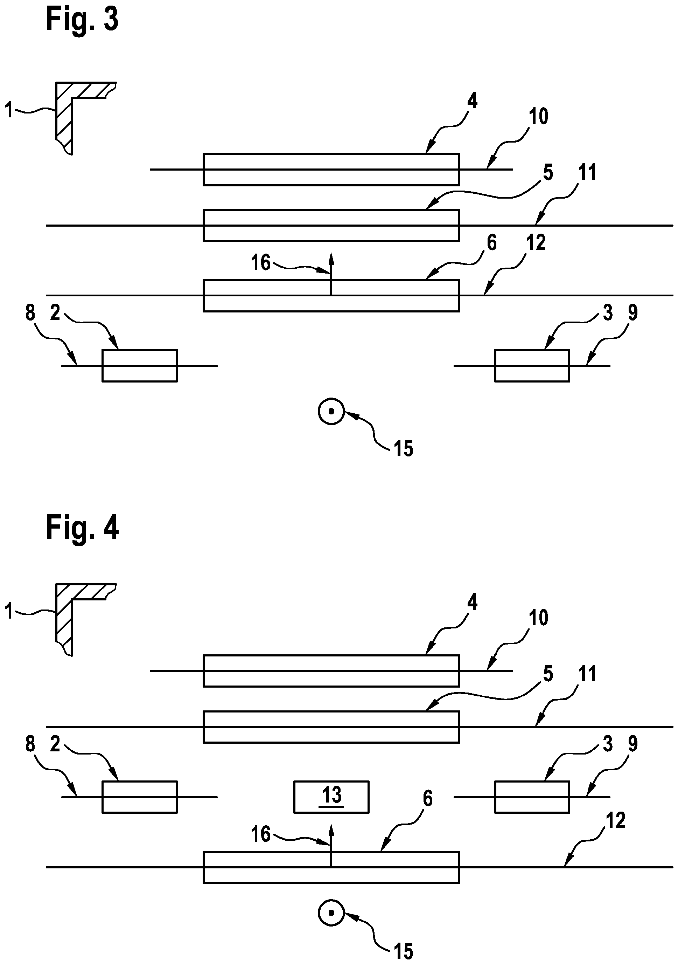

In der Figur 3 ist eine erfindungsgemäße Extruder-Vorrichtung 1 gemäß einer dritten Ausführungsform schematisch dargestellt. Im Unterschied zu der in der Figur 1 dargestellten Ausführungsform liegt die Base-Ebene 12, in der der Base-Extruder 6 liegt, zwischen einer Wing-Ebene 8, 9 und einer Cap-Ebene 4, 5.

In der Figur 4 ist eine erfindungsgemäße Extruder-Vorrichtung 1 gemäß einer vierten Ausführungsform schematisch dargestellt. Gemäß der in der Figur 4 schematisch dargestellten Ausführungsform ist mindestens eine weitere Extruder-Komponente 13 räumlich zwischen dem mindestens einen zweiten Cap-Extruder 5 und dem mindestens einen Base-Extruder 6 angeordnet. Die mindestens eine weitere Extruder-Komponente 13 ist zur Extrusion einer weiteren Substanz vorgesehen. Die mindestens eine weitere Extruder-Komponente 13 ist darüber hinaus räumlich zwischen der mindestens einen ersten Wing-Extruderkomponente 2 und der mindestens einen zweiten Wing-Extruderkomponente 3 angeordnet.

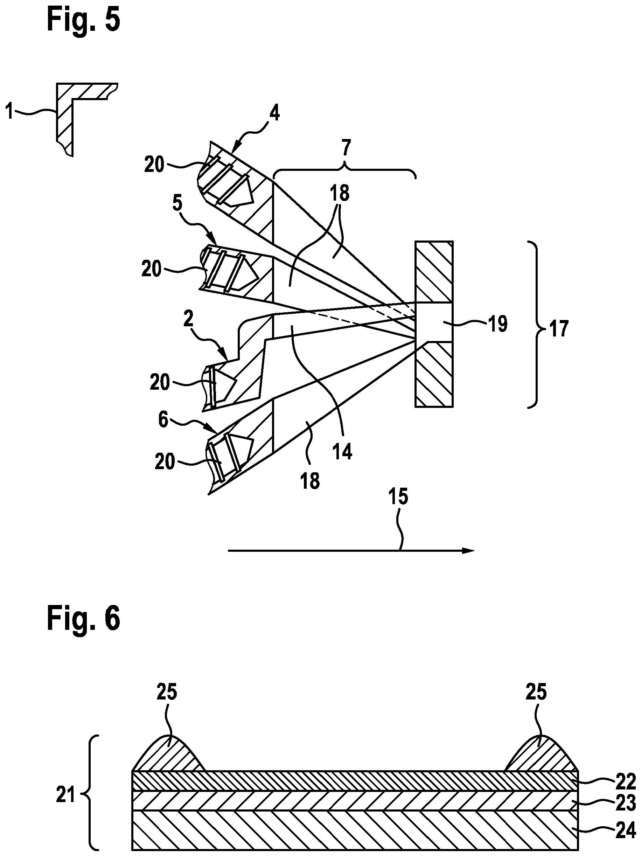

In der Figur 5 ist eine erfindungsgemäße Extruder-Vorrichtung 1 gemäß einer fünften Ausführungsform schematisch im Schnitt dargestellt. Die Richtung der Extrusionsbewegung 15 weist von dem ersten Cap-Extruder 4, dem zweiten Cap-Extruder 5, der ersten Wing-Extruderkomponente 2 und dem Base-Extruder 6 in Richtung einer Vorform-Vorrichtung 7 und einer Extruder-Düse 17. Die Vorform-Vorrichtung 7 weist insbesondere Extruderkopf-Fließkanäle auf, wobei die Extruderkopf-Fließkanäle zum Transport zu extrudierender Materialien geeignet sind.

Die Extruder-Düse 17 kann auch als Vorschablone bezeichnet werden. Zur Erzeugung der Extrusion der Kautschukmischungen sind in dem ersten Cap-Extruder 4, dem zweiten Cap-Extruder 5, der ersten Wing-Extruderkomponente 2 und dem Base-Extruder 6 Extruder-Schrauben 20 angeordnet. Die Extruder-Schrauben 20 sind vorzugsweise als mechanische Schnecke ausgebildet.

Die Darstellung in der Figur 5 zeigt lediglich die erste Wing-Extruderkomponente 2, die zweite Wing-Extruderkomponente 3 ist in dieser Darstellung nicht widergeben aber dennoch technischer Bestandteil der Extruder-Vorrichtung 1. Über Kanäle 18 der Vorform-Vorrichtung 7 werden Kautschukmischungen aus dem ersten Cap-Extruder 4, dem zweiten Cap-Extruder 5 und dem Base-Extruder 6 in Richtung einer Öffnung 19 der Extruder-Düse 17 geführt.

Die mindestens eine erste Wing-Extruderkomponente 2 und die mindestens eine zweite Wing-Extruderkomponente 3 sind über mindestens einen Verbindungskanal 14 derart mit der Vorform-Vorrichtung 7 verbunden, dass der mindestens eine Verbindungskanal 14 die mindestens eine Wing-Kautschukmischung derart mit der mindestens einen ersten Cap-Kautschukmischung und der mindestens einen zweiten Cap-Kautschukmischung und der mindestens einen Base-Kautschukmischung zusammenführt, dass die mindestens eine erste Cap-Kautschukmischung und die mindestens eine zweite Cap-Kautschukmischung räumlich zwischen der mindestens einen Wing-Kautschukmischung und der mindestens einen Base-Kautschukmischung angeordnet ist. Der Verbindungskanal 14 kann auch Fließkanal bezeichnet werden.

In der Figur 6 ist eine extrudierte Kautschukmischung 21 eines Laufstreifens eines Luftreifens im Querschnitt schematisch dargestellt. Die in der Figur 6 dargestellte Kautschukmischung wurde mittels einer erfindungsgemäßen Extruder-Vorrichtung 1 extrudiert. Es handelt sich um die Gesamtkautschukmischung. Insbesondere wurde die in der Figur 6 dargestellte extrudierte Kautschukmischung mittels einer erfindungsgemäßen Extruder-Vorrichtung 1 gemäß der Ausführungsform in der Figur 5 extrudiert. Die mindestens eine erste Cap-Kautschukmischung 22 und die mindestens eine zweiten Cap-Kautschukmischung 23 und die mindestens eine Base-Kautschukmischung 24 sind derart angeordnet, dass die mindestens eine erste Cap-Kautschukmischung 22 und die mindestens eine zweite Cap-Kautschukmischung 23 räumlich zwischen mindestens einer Wing-Kautschukmischung 25 und mindestens einer Base-Kautschukmischung 24 angeordnet sind. Die Wing-Kautschukmischungen 25 der ersten Wing-Extruderkomponente 2 und der zweiten Wing-Extruderkomponente 3 sind insbesondere hinsichtlich ihrer chemischen Zusammensetzung identisch.

### Bezugszeichenliste

### (Teil der Beschreibung)

- 1: Extruder-Vorrichtung
- 2: erste Wing-Extruderkomponente
- 3: zweite Wing-Extruderkomponente
- 4: erster Cap-Extruder
- 5: zweiter Cap-Extruder
- 6: Base-Extruder
- 7: Vorform-Vorrichtung
- 8: erste Wing-Ebene
- 9: zweite Wing-Ebene
- 10: erste Cap-Ebene
- 11: zweite Cap-Ebene
- 12: Base-Ebene
- 13: weitere Extruder-Komponente
- 14: Verbindungskanal
- 15: Richtung der Extrusionsbewegung
- 16: Normalenvektor des Base-Ebene
- 17: Extruder-Düse
- 18: Kanäle der Vorform-Vorrichtung
- 19: Öffnung der Extruder-Düse
- 20: Extruder-Schrauben
- 21: extrudierte Kautschukmischung
- 22: erste Cap-Kautschukmischung
- 23: zweite Cap-Kautschukmischung
- 24: Base-Kautschukmischung
- 25: Wing-Kautschukmischung
- 26: erste Raumhälfte
- 27: zweite Raumhälfte

## Patentansprüche

1. Extruder-Vorrichtung (1) zur Extrusion von Kautschuk (21), aufweisend mindestens eine erste Wing-Extruderkomponente (2) und mindestens eine zweite Wing-Extruderkomponente (3) und mindestens einen ersten Cap-Extruder (4) und mindestens einen zweiten Cap-Extruder (5) und mindestens einen Base-Extruder (6) und mindestens eine Vorform-Vorrichtung (7), wobei die mindestens eine erste Wing-Extruderkomponente (2) und die mindestens eine zweite Wing-Extruderkomponente (3) zur Extrusion mindestens einer Wing-Kautschukmischung (25) vorgesehen sind und der mindestens eine erste Cap-Extruder (4) zur Extrusion mindestens einer ersten Cap-Kautschukmischung (22) und der mindestens eine zweite Cap-Extruder (5) zur Extrusion mindestens einer zweiten Cap-Kautschukmischung (23) vorgesehen sind und der mindestens eine Base-Extruder (6) zur Extrusion einer Base-Kautschukmischung (24) vorgesehen ist, wobei die erste Wing-Extruderkomponente (2) in einer ersten Wing-Ebene (8) liegt und die zweite Wing-Extruderkomponente (3) in einer zweiten Wing-Ebene (9) liegt und der mindestens eine erste Cap-Extruder (4) in einer ersten Cap-Ebene (10) liegt und der mindestens eine zweite Cap-Extruder (5) in einer zweiten Cap-Ebene (11) liegt und der Base-Extruder (6) in einer Base-Ebene (12) liegt, wobei die erste Wing-Ebene (8), die zweite Wing-Ebene (9), die erste Cap-Ebene (10), die zweite Cap-Ebene (11) und die Base-Ebene (12) zueinander parallel liegen,
wobei in Richtung einer Extrusionsbewegung (15) räumlich vor der mindestens einen Vorform-Vorrichtung (7) der mindestens eine erste Cap-Extruder (4) und der mindestens eine zweite Cap-Extruder (5) räumlich nebeneinander angeordnet sind und eine Wing-Ebene (8, 9) räumlich unterhalb der zweiten Cap-Ebene (9) liegt, **dadurch gekennzeichnet, dass**
mindestens eine weitere Extruderkomponente (13), die zur Extrusion einer weiteren Substanz vorgesehen ist, räumlich zwischen dem mindestens einem zweiten Cap-Extruder (5) und dem mindestens einem Base-Extruder (6) angeordnet ist und/oder dass die mindestens eine weitere Extruderkomponente (13) räumlich zwischen der mindestens einen ersten Wing-Extruderkomponente (2) und der mindestens einen zweiten Wing-Extruderkomponente (3) angeordnet ist.

2. Extruder-Vorrichtung (1) nach Anspruch 1, **dadurch gekennzeichnet, dass** die mindestens eine erste Wing-Extruderkomponente (2) und/oder die mindestens eine zweite Wing-Extruderkomponente (3) räumlich zwischen dem mindestens einen zweiten Cap-Extruder (5) und dem mindestens einen Base-Extruder (6) angeordnet sind.

3. Extruder-Vorrichtung (1) nach Anspruch 1, **dadurch gekennzeichnet, dass** die Base-Ebene (12) zwischen einer Wing-Ebene (8, 9) und einer Cap-Ebene (10, 11) liegt.

4. Extruder-Vorrichtung (1) nach einem der vorhergehenden Ansprüche, **dadurch gekennzeichnet, dass** die mindestens eine erste Wing-Extruderkomponente (2) und die mindestens eine zweite Wing-Extruderkomponente (3) über mindestens eine Verbindungsvorrichtung (14) derart mit der Vorform-Vorrichtung (7) verbunden sind, dass die mindestens eine Verbindungsvorrichtung (14) die mindestens eine Wing-Kautschukmischung (25) derart mit der mindestens einen ersten Cap-Kautschukmischung (22) und der mindestens einen zweiten Cap-Kautschukmischung (23) und der mindestens einen Base-Kautschukmischung (24) zusammenführt, dass die mindestens eine erste Cap-Kautschukmischung (22) und die mindestens eine zweite Cap-Kautschukmischung (23) räumlich zwischen der mindestens einen Wing-Kautschukmischung (25) und der mindestens einen Base-Kautschukmischung (24) angeordnet ist.

## Claims

1. Extruder device (1) for extrusion of rubber (21), having at least one first wing extruder component (2) and at least one second wing extruder component (3) and at least one first cap extruder (4) and at least one second cap extruder (5) and at least one base extruder (6) and at least one preform device (7), wherein the at least one first wing extruder component (2) and the at least one second wing extruder component (3) are provided for extrusion of at least one wing rubber mixture (25), and the at least one first cap extruder (4) is provided for extrusion of at least one first cap rubber mixture (22) and the at least one second cap extruder (5) is provided for extrusion of at least one second cap rubber mixture (23), and the at least one base extruder (6) is provided for extrusion of a base rubber mixture (24), wherein the first wing extruder component (2) lies in a first wing plane (8) and the second wing extruder component (3) lies in a second wing plane (9) and the at least one first cap extruder (4) lies in a first cap plane (10) and the at least one second cap extruder (5) lies in a second cap plane (11) and the base extruder (6) lies in a base plane (12), wherein the first wing plane (8), the second wing plane (9), the first cap plane (10), the second cap plane (11) and the base plane (12) lie parallel to one another,
wherein, in the direction of an extrusion movement (15), spatially upstream of the at least one preform device (7), the at least one first cap extruder (4) and the at least one second cap extruder (5) are arranged spatially next to one another and a wing plane (8, 9) lies spatially below the second cap plane (9),
**characterized in that**
at least one further extruder component (13), which is provided for extrusion of a further substance, is arranged spatially between the at least one second cap extruder (5) and the at least one base extruder (6), and/or **in that** the at least one further extruder component (13) is arranged spatially between the at least one first wing extruder component (2) and the at least one second wing extruder component (3).

2. Extruder device (1) according to Claim 1, **characterized in that** the at least one first wing extruder component (2) and/or the at least one second wing extruder component (3) are/is arranged spatially between the at least one second cap extruder (5) and the at least one base extruder (6).

3. Extruder device (1) according to Claim 1, **characterized in that** the base plane (12) lies between a wing plane (8, 9) and a cap plane (10, 11) .

4. Extruder device (1) according to one of the preceding claims, **characterized in that** the at least one first wing extruder component (2) and the at least one second wing extruder component (3) are connected to the preform device (7) by means of at least one connecting device (14) in such a way that the at least one connecting device (14) brings the at least one wing rubber mixture (25) together with the at least one first cap rubber mixture (22) and the at least one second cap rubber mixture (23) and the at least one base rubber mixture (24) in such a way that the at least one first cap rubber mixture (22) and the at least one second cap rubber mixture (23) are arranged spatially between the at least one wing rubber mixture (25) and the at least one base rubber mixture (24).

## Revendications

1. Dispositif d'extrusion (1) destiné à l'extrusion de caoutchouc (21), ledit dispositif comprenant au moins un premier composant d'extrusion d'aile (2) et au moins un deuxième composant d'extrusion d'aile (3) et au moins une première extrudeuse de tête (4) et au moins une deuxième extrudeuse de tête (5) et au moins une extrudeuse de base (6) et au moins un dispositif de préformage (7), l'au moins un premier composant d'extrudeuse d'aile (2) et l'au moins un deuxième composant d'extrudeuse d'aile (3) étant prévus pour l'extrusion d'au moins un mélange de caoutchoucs d'aile (25) et l'au moins une première extrudeuse de tête (4) étant prévue pour l'extrusion d'au moins un premier mélange de caoutchouc de tête (22) et l'au moins une deuxième extrudeuse de tête (5) étant prévue pour l'extrusion d'au moins un deuxième mélange de caoutchoucs de tête (23) et l'au moins une extrudeuse de base (6) étant prévue pour l'extrusion d'un mélange de caoutchoucs de base (24), le premier composant d'extrudeuse d'aile (2) étant situé dans un premier plan d'aile (8) et le deuxième composant d'extrudeuse d'aile (3) étant situé dans un deuxième plan d'aile (9) et l'au moins une première extrudeuse de tête (4) étant située dans un premier plan de tête (10) et l'au moins une deuxième extrudeuse de tête (5) étant située dans un deuxième plan de tête (11) et l'extrudeuse de base (6) étant située dans un plan de base (12), le premier plan d'aile (8), le deuxième plan d'aile (9), le premier plan de tête (10), le deuxième plan de tête (11) et le plan de base (12) étant parallèles entre eux, dans la direction d'un mouvement d'extrusion (15), spatialement en amont de l'au moins un dispositif de préformage (7), l'au moins une première extrudeuse de tête (4) et l'au moins une deuxième extrudeuse de tête (5) étant disposées spatialement l'une à côté de l'autre, et un plan d'aile (8, 9) étant spatialement au-dessous du deuxième plan de tête (9),
**caractérisé en ce que**
au moins un autre composant d'extrudeuse (13), qui est prévu pour l'extrusion d'une autre substance, est disposé spatialement entre l'au moins une deuxième extrudeuse de tête (5) et l'au moins une extrudeuse de base (6) et/ou **en ce que** l'au moins un autre composant d'extrusion (13) est disposé spatialement entre l'au moins un premier composant d'extrudeuse d'aile (2) et l'au moins un deuxième composant d'extrudeuse d'aile (3) .

2. Dispositif d'extrusion (1) selon la revendication 1, **caractérisé en ce que** l'au moins un premier élément d'extrusion d'aile (2) et/ou l'au moins un deuxième élément d'extrusion d'aile (3) sont disposés spatialement entre l'au moins une deuxième extrudeuse de tête (5) et l'au moins une extrudeuse de base (6).

3. Dispositif d'extrusion (1) selon la revendication 1, **caractérisé en ce que** le plan de base (12) est situé entre un plan d'aile (8, 9) et un plan de tête (10, 11) .

4. Dispositif d'extrusion (1) selon l'une des revendications précédentes, **caractérisé en ce que** l'au moins un premier composant d'extrusion d'aile (2) et l'au moins un deuxième composant d'extrusion d'aile (3) sont reliés au dispositif de préformage (7) par au moins un dispositif de liaison (14) de sorte que l'au moins un dispositif de liaison (14) rassemble l'au moins un mélange de caoutchoucs d'aile (25) à l'au moins un premier mélange de caoutchoucs de tête (22) et à l'au moins un deuxième mélange de caoutchoucs de tête (23) et à l' au moins un mélange de caoutchoucs de base (24) de sorte que l'au moins un premier mélange de caoutchoucs de tête (22) et l'au moins un deuxième mélange de caoutchoucs de tête (23) sont disposés spatialement entre l'au moins un mélange de caoutchoucs d'aile (25) et l'au moins un mélange de caoutchoucs de base (24).
